# EUROPÄISCHE PATENTANMELDUNG

(11) **EP 2 280 461 A1**
(43) Veröffentlichungstag der Anmeldung: **02.02.2011**
(21) Anmeldenummer: 09166472.2
(22) Anmeldetag: 27.07.2009
(51) Int. Cl.: H02G 3/04, H02G 3/22, A62C 3/16, F16L 5/04

(54) **Durchführen eines Kabels, einer Leitung oder eines Rohrs durch eine Raumbegrenzung**

(71) Anmelder: Firentis AG, 4310 Rheinfelden (CH)
(72) Erfinder: Gmür, Peter, 4124 Schönenbuch (CH); Bachmann, Hartmut, 79539 Lörrach (DE); Vögtlin, Diego, 4415 Lausen (CH); Armando, Martin, 4123 Allschwil (CH)
(74) Vertreter: Vossius & Partner

(57) **Zusammenfassung**

Eine Durchführvorrichtung (1) zum Durchführen eines Kabels, einer Leitung oder eines Rohrs durch eine Raumbegrenzung (5) umfasst eine Mehrzahl von in einem feuerwiderständigen Bauteil (3) eingebetteten Durchführungen (2). Die Durchführungen (2) durchragen dabei jeweils das feuerwiderständige Bauteil (3) und weisen jeweils mindestens ein intumeszentes Schwellelement (21) auf. Eine solche Durchführvorrichtung (1) ermöglicht insbesondere eine einfache fehlerarme und vorausplanend ausgelegte Konstruktion einer brandabschnittbildenden mit Durchführungen versehenen Raumbegrenzung (5). Beispielsweise kann die Durchführvorrichtung (1) als Modulschott in verschiedenen vordefinierten Dimensionen und mit verschiedenen Anordnungen von Durchführungen (2) fachgerecht vorgefertigt werden. Bei der Konstruktion einer brandabschnittbildenden Raumbegrenzung (5) wird dann noch ein geeignet vorgefertigter Modulschott ausgewählt, in einen Durchbruch der Raumbegrenzung (5) eingesetzt und mit dieser verbunden.

## Beschreibung

### Technisches Gebiet

Die Erfindung betrifft eine Durchführvorrichtung gemäß dem unabhängigen Anspruch 1, ein Abdichtungselement gemäß dem unabhängigen Anspruch 11 sowie ein Verfahren gemäß dem unabhängigen Anspruch 13. Solche Durchführvorrichtungen mit einer eingebetteten Durchführung bzw. solche Verfahren mit einer solchen Durchführvorrichtung können zum Durchführen eines Kabels, einer Leitung und/oder eines Rohrs durch eine Raumbegrenzung wie eine Wand oder eine Decke eingesetzt werden. Weiter können solche Abdichtungselemente zum Abdichten der Durchführungen einer solchen Durchführvorrichtung eingesetzt werden.

### Stand der Technik

Beim Neubau und beim Umbau beziehungsweise der Sanierung von Gebäuden wie beispielsweise Spitälern oder Forschungslabors werden heute häufig bauliche Maßnahmen ergriffen, um die Entstehung und Ausbreitung von Bränden einzudämmen beziehungsweise zu verhindern. Unter anderem werden dazu Brandabschnitte in den Gebäuden gebildet, wobei ein Brandabschnitt einen Bereich eines Gebäudes darstellt, der im Brandfall bestimmungsgemäß ausbrennt und keinen Feuerüberschlag auf andere Brandabschnitte zulässt. Häufig werden Brandabschnitte in einem Gebäude gebildet, indem Abgrenzungen zwischen zwei oder mehreren Räumen feuerwiderständig mit geeigneten Materialien ausgestaltet werden. Solche Raumbegrenzungen können also als feuerwiderständige Wände und/oder als feuerwiderständige Decken in geeigneter Form ausgestaltet sein, so dass Brandabschnitte festgelegt werden können.

Bei der Konstruktion von feuerwiderständigen Raumbegrenzungen ist unter anderem die Durchführung von Kabeln, von Leitungen und/oder von Rohren durch die Raumbegrenzung hindurch besonders zu beachten. Typischerweise wird dabei die Raumbegrenzung vorerst mit einem Durchbruch versehen, durch den hindurch die Kabel, Leitungen und/oder Rohre angeordnet werden. Der Durchbruch wird dann mittels einer Abschottung so versiegelt, dass die durch den Durchbruch entstandene Verminderung des Feuerwiderstands der Raumbegrenzung möglichst wieder rückgängig gemacht werden kann.

Üblicherweise werden die Kabel beziehungsweise die Leitungen beziehungsweise die Rohre heute direkt mit einem geeigneten Baustoff abgeschottet. Bei Kabeln werden häufig auch Schutzrohre eingesetzt, durch die jeweils mehrere Kabel hindurchgezogen werden können. Solche Schutzrohre werden teilweise durch die Brandabschottung durchgeführt oder direkt in den Durchbruch einbetoniert. Nachteilig bei solchen Durchführungen kann sein, dass ein Brand beziehungsweise dadurch entstandener Rauch über die Schutzrohre die Raumbegrenzung durchdringen kann und somit kein wirklicher Brandabschnitt gebildet werden kann.

Um diesem Problem heute zu begegnen, werden die Schutzrohre im Bereich der Abschottung mit einem intumeszenten Material umgeben. In einem Brandfall wird das intumeszente Material durch die brandverursachte Hitze expandiert, wodurch die Schutzrohre im Brandfall abgedichtet werden sollten. Die Konstruktion einer Raumbegrenzung mit so vor Ort angeordneten Schutzrohren erfüllt jedoch zumeist den üblicherweise geforderten Feuerwiderstand nicht. Zudem bieten solche Durchführungen keinen oder nur beschränkten Schutz bezüglich der Ausbreitung von Kaltrauch durch die Raumbegrenzung hindurch. Die erwähnte Konstruktion ist außerdem verhältnismäßig kompliziert und unflexibel, so dass einerseits bei der Abschottung der Raumbegrenzung verhältnismäßig leicht Fehler geschehen können und andererseits verhältnismäßig häufig Sanierungen der Abschottung auf Grund geänderter Bedürfnisse beispielsweise hinsichtlich der Art und Anzahl der Durchführungen anfallen können.

In der DE 10 2006 001 644 A1 ist beispielsweise ein Verfahren beschrieben, bei dem während der Konstruktion der Raumbegrenzung eine Leitung oder eine Halterung für mehrere Leitungen durch einen Durchbruch in einer Raumbegrenzung hindurch gezogen wird, wobei zwischen der Leitung beziehungsweise der Halterung und der Raumbegrenzung ein Dämmmaterial angeordnet wird. Weiter wird eine flexible Matte aus einem intumeszenten Material fest an der Raumbegrenzung und beabstandet vom Durchbruch an der Leitung beziehungsweise der Halterung befestigt, so dass die Matte den Durchbruch überspannt. Im Falle eines Brandes wird die Matte durch die brandverursachte Hitze aufgeschäumt und die Leitung beziehungsweise die Halterung wird versiegelt. Die Verwendung einer solchen Matte erlaubt einen Einsatz unabhängig von bestimmten Abmessungen der Leitung beziehungsweise der Halterung sowie eine verhältnismäßig einfache Sanierung bestehender Leitungen beziehungsweise Halterungen. Jedoch ist auch die Konstruktion einer solchen Raumbegrenzung verhältnismäßig kompliziert und unflexibel, so dass einerseits bei der Konstruktion verhältnismäßig leicht Fehler geschehen können und andererseits verhältnismäßig häufig Sanierungen der Raumbegrenzung auf Grund geänderter Bedürfnisse hinsichtlich der Art und Anzahl der Durchführungen anfallen können. Zudem bieten solche Durchführungen mit Matten ebenfalls keinen oder nur beschränkten Schutz bezüglich der Ausbreitung von Kaltrauch durch die Raumbegrenzung hindurch.

Aufgabe der nachfolgenden Erfindung ist es daher, eine Durchführung eines Kabels, einer Leitung oder eines Rohrs durch eine Raumbegrenzung vorzuschlagen, die eine verhältnismäßig einfache Konstruktion der Raumbegrenzung sowie eine verhältnismäßig einfache Anpassung an geänderte Bedürfnisse ermöglicht.

### Darstellung der Erfindung

Die Aufgabe wird erfindungsgemäß durch eine Durchführvorrichtung gelöst, wie sie im unabhängigen Patentanspruch 1 definiert ist. Vorteilhafte Ausführungsvarianten der erfindungsgemäßen Durchführvorrichtung ergeben sich aus den abhängigen Patentansprüchen.

Das Wesen der Erfindung besteht im Folgenden: Eine Durchführvorrichtung zum Durchführen eines Kabels, einer Leitung und/oder eines Rohrs durch eine Raumbegrenzung, wie beispielsweise eine Wand oder eine Decke, umfasst eine Mehrzahl von in einem feuerwiderständigen Bauteil eingebetteten Durchführungen. Unter "feuerwiderständig" wird hier die Eigenschaft verstanden, einen für einen bestimmten Zeck ausreichenden Feuerwiderstand aufzuweisen. Beispielsweise kann dieser bestimmte Zweck die Bildung eines Randabschnitts sein und der ausreichende Feuerwiderstand kann mittels Festlegung einer geeigneten minimalen Feuerwiderstandsklasse beziehungsweise einer minimalen Baustoffklasse zum Beispiel gemäß der Deutschen industrienorm (DIN) 4102 definiert sein. Insbesondere kann "feuerwiderständig" auch mindestens hochfeuerhemmend" im Sinne der Feuerwiderstandsklasse EI 60 gemäß der DIN EN 13501 (entspricht F60 gemäß der DIN 4102) oder vorzugsweise "mindestens feuerbeständig" im Sinne der Feuerwiderstandsklasse EI 90 gemäß der DIN EN 13501 (entspricht F90 gemäß der DIN 4102) beziehungsweise "mindestens schwerentflammbar" im Sinne der Baustofiklasse C s3 d2 gemäß der DIN EN 13501 (entspricht B1 gemäß der DIN 4102) oder vorzugsweise "nicht brennbar" im Sinne der Baustoffklasse A1 oder A2 s1 d0 gemäß der DIN EN 13501 (entspricht A gemäß der DIN 4102) entsprechen. Unter "Bauteil" der Durchführvorrichtung wird hier eine bauliche Einheit beziehungsweise ein Modul verstanden, die beziehungsweise das als Ganzes zusammen mit den Durchführungen in eine Raumbegrenzung einbaubar ist und die beziehungsweise das eingebaut einen Teil der Raumbegrenzung bildet. Das Bauteil kann dazu ausgestaltet sein, um in Massivbau-Raumbegrenzungen und/oder in Leichtbau-Raumbegrenzungen und/oder in eine Hart- oder Weichabschotung wie etwa ein EI60 Einplattenschott 60 mm oder ein E190 Zweiplattenschott 2x60 mm eingebaut zu werden. Die Durchführungen durchragen jeweils das feuerwiderständige Bauteil, wobei sie jeweils mindestens ein intumeszentes Schwellelement aufweisen. Die erfindungsgemäße Durchführvorrichtung kann also als selbsttragende modulare Einheit insbesondere als Modulschott vorgefertigt sein und dann während der Konstruktion der Raumbegrenzung auf einfache Weise in einen Durchbruch der Raumbegrenzung eingebaut werden. In einem Brandfall werden die Durchführungen jeweils von dem durch die brandverursachte Hitze aufquellenden intumeszenten Schwellelement abgedichtet. Das feuerwiderständige Bauteil kann beispielsweise als feuerwiderständige Platte ausgestaltet sein und die Durchführvorrichtung kann beispielsweise zwei, vier, sechs oder acht Durchführungen aufweisen. Weiter können die Durchführungen bestimmte Standardinnendurchmesser aufweisen. Insbesondere können die Durchführungen jeweils zur Verbindung mit einem Schutzrohr für Kabel also einem Kabelschutzrohr beziehungsweise einem flammwidrigen Rohr für Kabel ausgelegt sein, wobei die Standardaußendurchmesser solcher Schutzrohren beziehungsweise solcher flammwidriger Rohre beispielsweise 16 mm, 20 mm, 25 mm, 32 mm, 40 mm, 50 mm oder 63 mm betragen.

Die erfindungsgemäße Durchführvorrichtung ermöglicht insbesondere eine einfache fehlerarme und vorausplanend ausgelegte Konstruktion einer feuerwiderständigen mit Durchführungen versehenen Raumbegrenzung beispielsweise zur Bildung von Brandabschnitten in einem Gebäude. Beispielsweise kann die Durchführvorrichtung als Modulschott in verschiedenen vordefinierten Dimensionen und mit verschiedenen Anordnungen von Durchführungen fachgerecht vorgefertigt werden. Bei der Konstruktion einer feuerwiderständigen Raumbegrenzung wird dann ein geeignet vorgefertigter Modulschott ausgewählt, in einen Durchbruch der Raumbegrenzung eingesetzt und mit dieser verbunden. Mehrere solche Modulschotte können auch kombiniert beziehungsweise zu einer Gruppe moduliert werden.

Vorzugsweise umfasst das feuerwiderständige Bauteil der Durchführvorrichtung mindestens zwei Abdeckungen und einen Kern, wobei der Kern zwischen den mindestens zwei Abdeckungen angeordnet ist. Ein solches mehrschichtiges Bauteil kann auf einfache Weise eine Ausgestaltung der Durchführvorrichtung als stabile selbsttragende Einheit ermöglichen. Dabei umfasst der Kern mit Vorteil eine Platte, die auf beiden Seiten jeweils von einem Dämmmaterial umgeben ist. Die Platte kann beispielsweise aus einem Metall hergestellt sein, so dass anfallende Wärme bevorzugt möglichst gleichmäßig über die ganze Fläche des Bauteils verteilt werden kann. Das Dämmmaterial kann beispielsweise ein mineralisches Material wie Steinwolle oder ein Kunststoff wie Phenolharz sein. Mittels des Dämmmaterials kann der Wärmeübergang durch das feuerwiderständige Bauteil reduziert beziehungsweise minimiert werden und die Platte kann eine verhältnismäßig gute Stabilität des Kerns ermöglichen. Die mindestens zwei Abdeckungen können aus einem Metall hergestellt sein, womit auf einfache Weise ein stabiles feuerwiderständiges Bauteil ermöglicht werden kann.

Mit Vorteil umfassen die Durchführungen jeweils ein das feuerwiderständige Bauteil durchragendes Durchführrohr. Das Durchführrohr kann dabei aus einem flammwidrigen Kunststoff wie beispielsweise Polyethylen hergestellt sein. Ein solches Durchführrohr kann unter anderem ein einfaches Einführen und Durchziehen von einem Kabel, einer Leitung oder einem Rohr durch die jeweilige Durchführung hindurch ermöglichen. Vorzugsweise weisen die Durchführrohre jeweils einen Innenraum auf, der von den beiden Rohrenden her in Richtung Rohrmitte zumindest teilweise verjüngend ausgestaltet ist. Solche Durchführrohre können als Einsteckmuffen beziehungsweise als Stoßmuffen dienen. Beispielsweise können sie zum Einstecken von Schutzrohren für Kabel, die insbesondere standardisierte Außendurchmesser aufweisen, ausgestaltet sein.

Vorzugsweise sind die Durchführungen so ausgestaltet, dass jeweils das mindestens eine Schwellelement im Wesentlichen um einen der beiden das feuerwiderständige Bauteil durchragenden Abschnitte des Durchführrohrs herum angeordnet ist. Dabei kann das mindestens eine Schwellelement insbesondere ringförmig ausgestaltet sein. Ein solches Schwelleiement kann ein zuverlässiges effizientes Abdichten der Durchführung ermöglichen, wenn ein Brandfall auf der Seite der Durchführvorächtung auftritt, auf der das Schwellelement angeordnet ist. Mit Vorteil umfassen die Durchführungen jeweils ein weiteres Schwellelement, welches zumindest teilweise um den anderen der beiden das feuerwiderständige Bauteil durchragenden Abschnitte des Durchführrohrs herum angeordnet ist. Die weiteren Schwellelemente können wiederum insbesondere ringförmig ausgestaltet sein. Da so auf beiden Seiten der Durchführvorrichtung Schwellelemente an den Durchführrohren angeordnet sind, können die Durchführungen bei Brandfällen auf beiden Seiten der Durchführvorrichtung zuverlässig und effizient abgedichtet werden.

Mit Vorteil umfassen die Durchführungen jeweils mindestens eine Hülse, wobei das mindestens eine Schwellelement in der mindestens einen Hülse gefasst ist. Damit kann das mindestens eine Schwellelement an einer bestimmungsgemäßen Position in der Durchführvomchtung gehalten werden. Die Hülse kann dabei insbesondere aus einem gut wärmeleitenden Material wie beispielsweise Metall hergestellt sein, womit ein guter Wärmeübergang auf das mindestens eine Schwellelement gewährleistet werden kann. Vorzugsweise weisen die Hülsen jeweils einen Flanschabschnitt auf, der zwischen dem Kern und einem der mindestens zwei Abdeckungen eingeklemmt ist. Damit können die Hülsen auf einfache Art fest mit dem Bauteil verbunden und die Schwellelemente an ihrer bestimmungsgemäßen Position gehalten werden. Mit Vorteil weist die mindestens eine Hülse eine Nase und das Durchführrohr eine Aufnahme auf, wobei die Nase der Hülse in der Aufnahme des Durchführrohrs angeordnet ist. Die Aufnahme kann beispielsweise als im Wesentlichen in Umlaufrichtung verlaufenden Schlitz ausgestaltet sein. Damit kann eine einfache effektive Fixierung des Durchführrohrs in Längsrichtung gewährleistet werden, so dass das Durchführrohr beispielsweise beim Einstecken eines Schutzrohrs oder beim Durchführen eines Kabels nicht unbeabsichtigt verschoben wird.

Ein weiterer Aspekt der Erfindung betrifft ein Abdichtungselement zum Abdichten einer Durchführung einer oben beschriebenen Durchführvorrichtung. Das Abdichtungselement weist dabei ein mindestens teilweise mit einem elastischen Material gefülltes, verhältnismäßig festes Außenrohr auf, wobei das Abdichtungselement in Längsrichtung aufklappbar ist. Das elastische Material kann dabei insbesondere ein möglichst dauerelastisches Material sein wie beispielsweise ein Formgedächtnis-Schaumgummi insbesondere ein Formgedächtnis-Polymer. Ein solches Abdichtungselement kann zur Aufnahme von Kabeln auf- und wieder zugeklappt werden. Es kann von Kabel durchragt oder auch ohne Kabel in eine Durchführung einer erfindungsgemäßen Durchführvorrichtung eingeführt werden, wodurch die Durchführung auch ohne expandiertes Schwellelement insbesondere für Kaltrauch abgedichtet sein kann. Insbesondere kann das Abdichtungselement in einem Durchführrohr der Durchführung eingesteckt werden, wozu es vorzugsweise einen standardisierten Außendurchmesser aufweist, beispielsweise einen Außendurchmesser wie oben in Bezug auf die Schutzrohre für Kabel beschrieben. Weiter kann ein solches Abdichtungselement auch zum Abdichten von anderen Durchführungen als denjenigen der erfindungsgemäßen Durchführvorrichtung eingesetzt, beispielsweise zur Abdichtung einer im Stand der Technik bekannten Durchführung.

Vorzugsweise weist das Außenrohr des Abdichtungselements zwei über ein Gelenk verbundene Rohrhälften auf, die jeweils mindestens teilweise mit dem elastischen Material gefüllt sind. Mit einem solchen Abdichtungselement kann ein einfaches dichtes Anordnen von Kabel oder Leitungen im Abdichtungselement ermöglicht werden.

Ein anderer weiterer Aspekt der Erfindung betrifft ein Verfahren zum Durchführen eines Kabels, einer Leitung oder eines Rohrs durch eine Raumbegrenzung, das folgende Schritte umfasst: Anordnen einer oben beschriebenen Durchführvorrichtung in einer Öffnung der Raumbegrenzung und dichtes Verbinden der Durchführvorrichtung und der Raumbegrenzung mittels eines thermoexpandierenden Materials. Bei dem Verbinden kann dabei die Durchführvorrichtung mit der Raumbegrenzung verklebt werden, wozu das thermoexpandierende Material, beispielsweise ein thermoexpandierender Dämmschichtbildner, vorzugsweise auch eine klebende Wirkung aufweist. Auf diese Weise kann einerseits eine einfache Konstruktion einer feuerwiderständigen Raumbegrenzung beispielsweise zur Bildung von Brandabschnitten in einem Gebäude ermöglicht werden und andererseits kann gewährleistet werden, dass kein Brand- oder Rauchübergang zwischen Durchführvorrichtung und Raumbegrenzung durch die Raumbegrenzung hindurch stattfinden kann. Insbesondere kann bei einem Brandfall der Bereich zwischen der Durchführvorrichtung und der Raumbegrenzung Mittels des durch die brandverursachte Hitze expandierten verbindenden Materials zuverlässig abgedichtet werden.

Vorzugsweise umfasst das Verfahren weiter folgende Schritte: Verbinden eines ersten Kabelschutzrohrs mit der einen Seite einer der Durchführungen der Durchführvorrichtung und optional Verbinden eines zweiten Kabelschutzrohrs mit der anderen Seite dieser Durchführung. Damit kann die Durchführvorrichtung auf einfache Weise mit bestehenden Schutzrohren für Kabel beziehungsweise Kabelschutzrohren verbunden und die darin angeordneten Kabel durch die Durchführvorrichtung geführt werden. Mit Vorteil umfasst das Verfahren weiter folgende Schritte: Aufklappen eines oben beschriebenen Abdichtungselements, das Abdichtungselement durchragendes Anordnen mindestens eines Kabels, Zuklappen des Abdichtungselement, womit das Kabel im Abdichtungselement eingeklemmt wird, und Einführen des Abdichtungselements in eine der Durchführungen der Durchführ-vorrichtung. Auf diese Weise können Kabel beziehungsweise Leitungen auch auf einfache Art rauchdicht und insbesondere kaltrauchdicht auch ohne Schutzrohr durch die Durchführvorrichtung geführt werden.

### Kurze Beschreibung der Zeichnungen

Im Folgenden werden die erfindungsgemäße Durchführvorrichtung, das erfindungsgemäße Abdichtungselement und das erfindungsgemäße Verfahren unter Bezugnahme auf die beigefügten Zeichnungen anhand von Ausführungsbeispielen detaillierter beschrieben. Es zeigen:
- Fig. 1: eine Querschnittansicht eines ersten in eine massive Wand eingebauten Ausführungsbeispiels einer erfindungsgemäßen Durchführvorrichtung;
- Fig. 2: eine schematische perspektivische Explosionsansicht eines feuerwiderständigen Bauteils eines zweiten Ausführungsbeispiels einer erfindungsgemäßen Durchführvorrichtung;
- Fig. 3: eine schematische perspektivische Ansicht von Durchführungen der Durchführvorrichtung von Fig. 2;
- Fig. 4: eine schematische perspektivische Ansicht eines Ausführungsbeispiels eines erfindungsgemäßen Abdichtungselements, und
- Fig. 5: eine schematische perspektivische Ansicht eines dritten Ausführungsbeispiels einer erfindungsgemäßen Durchführvorrichtung.

### Weg(e) zur Ausführung der Erfindunng

Bestimmte Ausdrücke werden in der folgenden Beschreibung aus praktischen Gründen verwendet und sind nicht einschränkend zu verstehen. Die Wörter "rechts" und "links" bezeichnen Richtungen in den Zeichnungen, auf die Bezug genommen wird. Die Ausdrücke ,,nach innen" und nach außen" bezeichnen Richtungen hin zum oder weg vom geometrischen Mittelpunkt der Durchführvorrichtungen sowie benannter Teile derselben. Die Terminologie umfasst die oben ausdrücklich erwähnte Wörter, Ableitungen von denselben und Wörter ähnlicher Bedeutung.

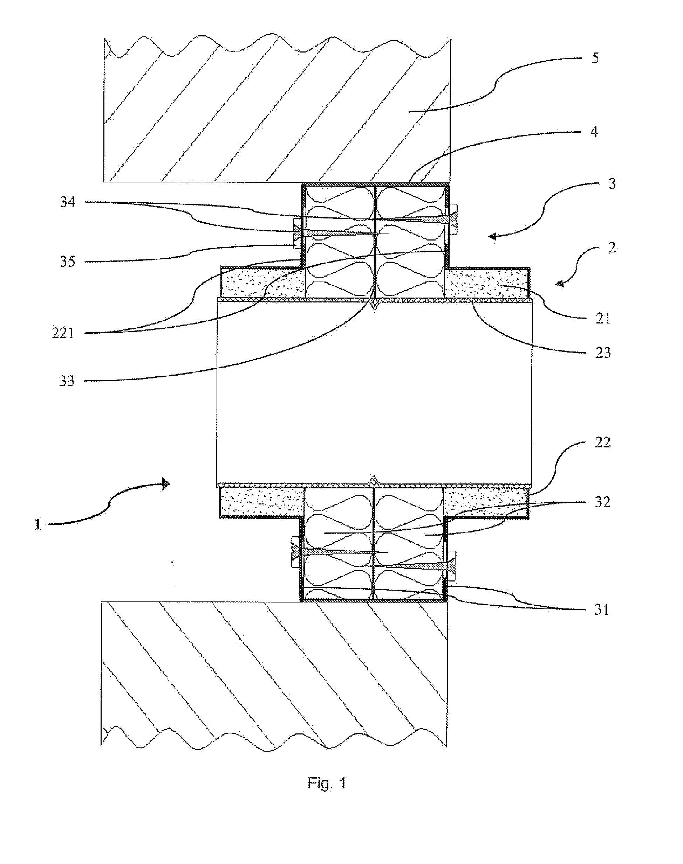

Fig. 1 zeigt ein erstes Ausführungsbeispiel einer erfindungsgemäßen Durchführvorrichtung 1, die in eine massive Wand 5 eingebaut ist. Die Durchführvorrichtung 1 weist ein von zwei übereinander angeordneten Durchführungen 2 durchragtes feuerwiderständiges Bauteil 3 auf. (In Fig. 1 ist nur eine der zwei Durchführungen 2 ersichtlich.) Das Bauteil 3 umfasst einen Kern mit einer metallischen Platte 33, die beidseitig jeweils von einer Steinwolischicht 32 als Dämmmaterial umgeben ist, und zwei metallischen Abdeckungen 31, die jeweils eine der Steinwollschichten 32 nach außen hin abdecken. Die Abdeckungen 31 sind jeweils mittels mehrerer senkrecht zur Platte 33 angeordneten Schrauben 34 mit der Platte 33 und den Steinwollschichten 32 zu einer Einheit von etwa 60 mm Dicke verbundene. Die trompetenförmigen Köpfe der Schrauben 34 sind jeweils mit einer Metallscheibe 35 unterlegt, um einen scharfkantigen Überstand der Schraubenköpfe zu vermeiden. Das Bauteil 3 ist an seinen Seitenflächen mittels eines klebenden thermoexpandierenden Materials 4 mit der Wand 5 verbunden.

Die Durchführungen 2 durchragen das Bauteil 3, indem jeweils ein Durchführrohr 23 aus Polyethylen durch eine Öffnung des Bauteils 3 hindurch angeordnet ist. Jedes der Durchführrohre 23 weist einen sich zu seiner Mitte nach innen hin konisch verjüngten Innenraum auf. Dabei sind die beiden das Bauteil 3 rechts und links nach außen überragenden Endbereiche des Durchführrohrs 23 jeweils von einem ringförmigen Schwellelement 21 aus einem intumeszenten Material umgeben. Die jeweiligen beiden Schwellelemente 21 sind jeweils in einer metallischen Hülse 22 gefasst, die ebenfalls vom zugehörigen Durchführrohr 23 durchragt wird. Die beiden Hülsen 22 jeder der Durchführungen 2 weisen jeweils einen Flanschabschnitt 221 auf, der zwischen einer der beiden Abdeckungen 31 des Bauteils 3 und einer der Steinwollschichten 32 des Bauteils 3 angeordnet ist. Dadurch sind die Durchführungen 2 ebenfalls mittels der Schrauben 34 fest mit dem Bauteil 3 zu einer Einheit beziehungsweise zu einem Modul verbunden. Die Hülsen 22 weisen jeweils eine Nase auf, die in einer Aufnahme des zugehörigen Durchführrohrs 23 angeordnet ist, so dass das Durchführrohr an den Hülsen 22 befestigt ist.

Die Durchführungen 2 sind so dimensioniert, dass sie für die vorgesehene Anwendung möglichst ideal geeignet sind. Insbesondere ist der Innenraum jedes Durchführrohrs 23 so ausgestaltet, dass ein standardisiertes Schutzrohr für Kabel also ein Kabelschutzrohr darin eingesteckt werden kann. Solche Schutzrohre weisen beispielsweise einen Außendurchmesser von 16 mm, 20 mm, 25 mm, 32 mm, 40 mm, 50 mm oder 63 mm auf, so dass der Innenraum des Durchführrohrs 23 einen entsprechenden Innendurchmesser aufweist.

Der Einbau der Durchführvorrichtung 1 kann so erfolgen, dass zuerst die Wand 5 mit einem Durchbruch beziehungsweise mit einer Öffnung versehen wird. Danach wird die Durchführvorrichtung 1 im Durchbruch angeordnet und mittels des klebenden thermoexpandierenden Materials 4 mit der Wand 5 dicht verbunden. Da die Durchführvorrichtung 1 insbesondere durch die Ausgestaltung des Bautells 3 eine selbsttragende stabile Einheit bildet, ist ein einfacher Einbau möglich. Im Betrieb nach dem Einbau können dann beispielsweise Kabel durch die Durchführungen 2 hindurch gelegt werden, die damit durch die Wand 5 hindurch geführt sind. Insbesondere können die Durchführungen 2 auch auf einer Seite mit ersten Kabelschutzrohren verbunden werden und auf der anderen Seite mit zweiten Kabelschutzrohren. Die Kabelschutzrohre werden dabei in die Durchführung 2 eingesteckt und durch die konische Ausgestaltung der Innenräume der Durchführrohre 23 in den Durchführungen 2 gehalten. Die Durchführungen 2 werden also als Steckmuffen für die Kabelschutzrohre eingesetzt. Die Kabel werden dann durch die Kabelschutzrohre und die Durchführungen 2 hindurch gelegt.

Bei einem auf einer Seite der Wand 5 auftretenden Brand wird die durch den Brand verursachte Hitze über die dem Brand zugewandten Hülsen 22 jeweils auf das zugehörige Schwellefement 21 übertragen. Da die Hülsen 22 aus Metall also aus einem gut wärmeleitfähigen Material hergestellt sind, wird die Hitze effizient auf die zugehörigen Schwellelemente 21 übertragen. Durch die auftretende Erwärmung der zugehörigen Schwellelemente 21 quellen diese auf und dichten die Durchführungen 2 ab. Gleichzeitig dehnt sich das thermoexpandierende Material 4 aus und dichtet dadurch den Bereich zwischen Durchführvorrichtung 1 und Wand 5 ab. Durch die Verwendung der in die Wand 5 eingebaute Durchführvorrichtung 1 zur Durchführung von Kabel durch die Wand 5, kann also vermieden werden, dass sich der Brand über die Kabel durch die Wand 5 hindurch ausbreitet.

Für die gesamte weitere Beschreibung gilt folgende Festlegung. Sind in einer Figur zum Zweck zeichnerische Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden Figuren Bezug genommen.

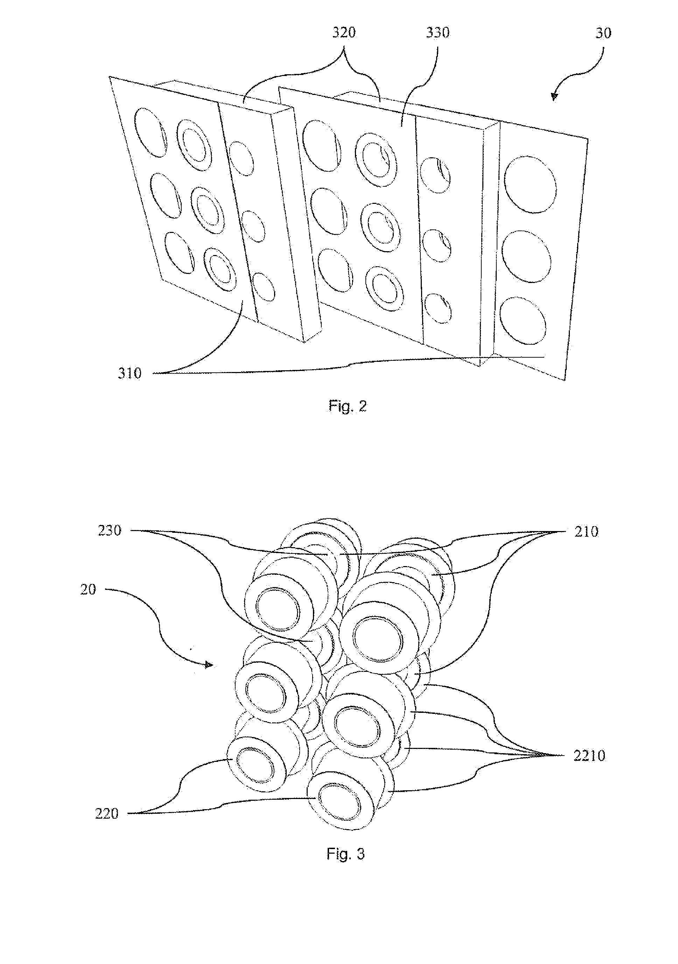

In Fig. 2 ist ein zerlegtes feuerwiderständiges Bauteil 30 eines zweiten Ausführungsbeispiels einer erfindungsgemäßen Durchführvorrichtung gezeigt. Das Bauteil 30 umfasst einen Kern mit einer metallischen Platte 330, die auf beiden Seiten jeweils eine Dämmschicht 320 beispielsweise aus Steinwolle oder einem anderen Wärmedämmstoff aufweist. Auf beiden Seiten des Kerns also auf den Außenseiten der beiden Dämmschichten 320 ist jeweils eine Abdeckung 310 beispielsweise aus Metall, aus Gips oder einem anderen geeigneten Material angeordnet. Das Bauteil 30 weist drei Reihen mit je zwei Öffnungen auf, die dazu ausgestaltet sind, zusammen sechs Durchführungen aufzunehmen. Die Einzelteile des Bauteils 30 sind in der zusammengesetzten Durchführvorrichtung mittels geeigneter Mittel wie beispielsweise Schrauben oder Klebstoff zu einer Einheit verbunden.

Fig. 3 zeigt die sechs Durchführungen 20 der Durchführvorrichtung von Fig. 2, wobei jede der sechs Durchführungen 20 ein Durchführrohr 230 beispielsweise aus einem feuerfesten Kunststoff umfasst. Um beide Endabschnitte jedes Durchführrohrs 230 herum ist jeweils ein in einer metallischen Hülse 220 gefasstes ringfömiges intumeszentes Schwellelement 210 angeordnet, wobei die Durchführrohre 230 jeweils die Schwellelemente 210 und die Hülsen 220 durchragten. Jede Hülse 220 weist einen rechtwinklig zum Hülsenkörper ausgestalteten Flanschabschnitt 2210 auf. Die Durchführungen 20 und insbesondere ihre Innenräume sind wie oben im Zusammenhang mit Fig. 1 beschrieben dimensioniert und ausgestaltet.

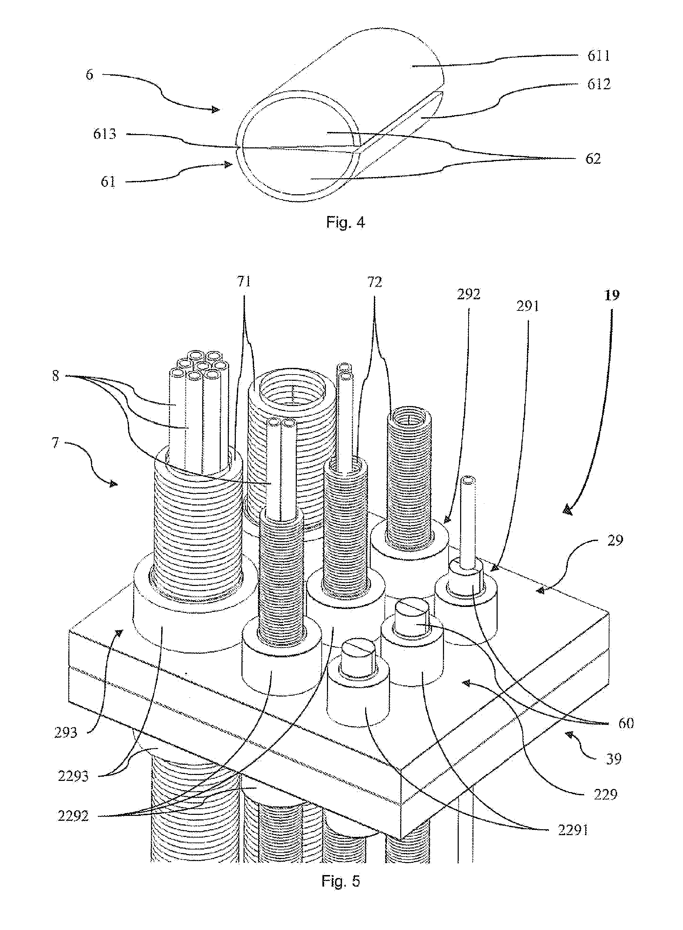

In Fig. 4 ist ein Ausführungsbeispiel eines erfindungsgemäßen Abdichtungselements 6 gezeigt. Das Abdichtungselement 6 weist ein Außenrohr 61 aus einem verhältnismäßig festen Material mit einer oberen Rohrhäifte 611 und einer unteren Rohrhälfte 612 auf. Dabei ist die obere Rohrhälfte 611 über eine Gelenk 613 mit der unteren Rohrhälfte 612 verbunden. Das Gelenk 613 ist als in Längsrichtung des Außenrohrs 61 verlaufende Kerbe im Außenrohr 61 ausgestaltet. Die konkaven Seiten der oberen Rohrhälfte 611 und der unteren Rohrhälfte 612 sind jeweils mit einem Formgedächtnis-Polymer 62 als elastisches Material so weit gefüllt, dass das Abdichtungselement 6 rauchdicht ist, wenn das Außenrohr 61 zugeklappt ist. Das Abdichtungselement 6 ist so dimensioniert, dass es dicht in einer Durchführung einer erfindungsgemäßen Durchführvorrichtung angeordnet werden kann. Insbesondere weist es einen entsprechenden Außendurchmesser auf, um dicht in einer wie in Bezug auf die Durchführvorrichtungen von Fig. 1 und Fig. 2 beschriebenen Durchführung angeordnet zu sein,

Fig. 5 zeigt ein drittes Ausführungsbeispiel einer erfindungsgemäßen Durchführvorrichtung 19, die ein feuerwiderständiges Bauteil 39 und acht in drei Reihen angeordnete Durchführungen 29 umfasst, wobei eine rechte Reihe 291 und eine mittlere Reihe 292 je drei Durchführungen 29 aufweisen und eine linke Reihe 293 zwei Durchführungen 29. Die Durchführungen 29 der rechten Reihe 291 weisen den kleinsten Innendurchmesser, die Durchführungen 29 der mittleren Reihe 292 einen mittleren Innendurchmesser und die Durchführungen 29 der linken Reihe 293 den größten Innendurchmesser auf, wobei die Durchführungen 29 alle wie in Bezug auf die Durchführvorrichtung von Fig. 1 beschrieben dimensioniert und ausgestaltet sind. Beispielsweise sind also die Durchführungen 29 der rechten Reihe 291 zur Verbindung mit Schutzrohren von 63 mm Außendurchmesser ausgestaltet, die Durchführungen 29 der mittleren Reihe 292 zur Verbindung mit Schutzrohren von 40 mm Außendurchmesser und die Durchführungen 29 der linken Reihe 293 zur Verbindung mit Schutzrohren von 25 mm Außendurchmesser.

In die Durchführungen 29 der linken Reihe 293 und der mittleren Reihe 292 sind jeweils Schutzrohre 7 eingesteckt, wobei die Durchführungen 29 der linken Reihe 293 mit großen Schutzrohren 71 verbunden sind und die Durchführungen 29 der mittleren Reihe 292 mit mittleren Schutzrohren 72. In die Durchführungen 29 der rechten Reihe 291 sind jeweils Abdichtungselemente 60 eingesteckt. Alle Durchführungen 29 der Durchführvorrichtung 19 sind als Einsteckmuffen für Schutzrohre 7 und für Abdichtungselemente 60 ausgestaltet. Durch das linke große Schutzrohr 71 der linken Reihe 293 von Durchführungen 29, durch die zwei linken mittleren Schutzrohre 72 der mittleren Reihe 292 von Durchführungen 29 sowie durch das rechte Abdichtungselement 60 der rechten Reihe 291 von Durchführungen 29 sind jeweils ein oder mehrere Kabel 8 hindurch angeordnet. Mittels der Abdichtelemente 60 wird zum einen ermöglicht, dass ein oder mehrere Kabel ohne Schutzrohre durch die Durchführvorrichtung 19 hindurch angeordnet sind. Zum anderen wird gleichzeitig vermieden, dass Rauch und insbesondere Kaltrauch die Durchführvorrichtung 19 durchdringen kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst, die Erfindung ebenfalls Ausführungsformen mit jeglicher Kombination von Merkmalen, die vorstehend oder nachfolgend zu verschiedenen Ausführungsformen genannt oder gezeigt sind. Zum Beispiel kann die Erfindung auch durch folgende weitere konstruktive Variationen realisiert sein:
- Die Durchführvorrichtung kann in beliebiger zweckmäßiger Dimensionierung mit einer beliebigen Anordnung von Durchführungen hergestellt werden. Insbesondere kann sie als Modul in einer fest vorgegebenen Größe mit fest vorgegebenen Durchführungen hergestellt werden, so dass je nach Anwendungsfall ein passendes Modul gewählt werden kann oder mehrere passende Module miteinander kombiniert werden können.
- Neben dem direkten Einbau in eine massive Raumbegrenzung, in eine Leichtbau-Raumbegrenzung oder in eine Hart- oder Weichabschottung mittels eines thermoexpandierenden Materials, kann die Durchführvorrichtung erfindungsgemäß auch über einen Rahmen bespielsweise aus feuerfesten Platten (z.B. Promatect H20 mm), der zwischen der Durchführvorrichtung und der Raumbegrenzung beziehungsweise der Abschottung angeordnet ist, eingebaut werden. Dabei kann insbesondere zunächst der Rahmen in einer Öffnung der Raumbegrenzung beziehungsweise der Abschottung angeordnet und mittels des thermoexpandierenden Materials damit verbunden werden. Dann kann die Durchführvorrichtung in den Rahmen eingesetzt und auf bekannte Weise damit verbunden werden.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Alle Bezugszeichen in den Ansprüchen sind nicht als den Umfang der Ansprüche einschränkend zu verstehen. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert.

## Patentansprüche

1. Durchführvorrichtung (1; 10; 19) zum Durchführen eines Kabels (8), einer Leitung und/oder eines Rohrs (7) durch eine Raumbegrenzung (5), welche Durchführvorrichtung (1; 10; 19) eine Mehrzahl von in einem feuerwiderständigen Bauteil (3; 30; 39) eingebetteten Durchführungen (2; 20; 29) umfasst, wobei die Durchführungen (2; 20; 29) jeweils das feuerwiderständige Bauteil (3; 30; 39) durchragen und wobei die Durchführungen (2; 20; 29) jeweils mindestens ein intumeszentes Schwellelement (21; 210) aufweisen.

2. Durchführvorrichtung (1; 10; 19) nach Anspruch 1, bei der das feuerwiderständige Bauteil (3; 30; 39) mindestens zwei Abdeckungen (31; 310) und einen Kern umfasst, wobei der Kern zwischen den mindestens zwei Abdeckungen (31; 310) angeordnet ist.

3. Durchführvorrichtung (1; 10; 19) nach Anspruch 2, bei der der Kern eine Platte (33; 330) umfasst, die auf beiden Seiten jeweils von einem Dämmmaterial (32; 320) umgeben ist.

4. Durchführvorrichtung (1; 10; 19) nach einem der vorangehenden Ansprüche, bei der die Durchführungen (2; 20; 29) jeweils ein das feuerwiderständige Bauteil (3; 30; 39) durchragendes Durchführrohr (23; 230) umfassen.

5. Durchführvorrichtung (1; 10; 19) nach Anspruch 4, bei der die Durchführrohre (23; 230) jeweils einen Innenraum aufweisen, der von den beiden Rohrenden her in Richtung Rohrmitte zumindest teilweise verjüngend ausgestaltet ist.

6. Durchführvorrichtung (1; 10; 19) nach Anspruch 4 oder 5, bei der die Durchführungen (2; 20; 29) so ausgestaltet sind, dass jeweils das mindestens eine Schwellelement (21; 210) im Wesentlichen um einen der beiden das feuerwiderständige Bauteil (3; 30; 39) durchragenden Abschnitte des Durchführrohrs (23; 230) herum angeordnet ist.

7. Durchführvorrichtung (1; 10; 19) nach Anspruch 6, bei der die Durchführungen (2; 20; 29) jeweils ein weiteres Schwellelement (21; 210) umfassen, welches zumindest teilweise um den anderen der beiden das feuerwiderständige Bauteil (3; 30; 39) durchragenden Abschnitte des Durchführrohrs (23; 230) herum angeordnet ist.

8. Durchführvorrichtung (1; 10; 19) nach einem der vorangehenden Ansprüche, bei der die Durchführungen (2; 20; 29) jeweils mindestens eine Hülse (22; 220; 229) umfassen, wobei das mindestens eine Schwellelement (21; 210) in der mindestens einen Hülse (22; 220; 229) gefasst ist.

9. Durchführvorrichtung (1; 10; 19) nach Anspruch 8, bei der die Hülsen (22; 220; 229) jeweils einen Flanschabschnitt (221; 2210) aufweisen, der zwischen dem Kern und einem der mindestens zwei Abdeckungen (31; 310) eingeklemmt ist.

10. Durchführvorrichtung (1; 10; 19) nach einem der Ansprüche 4 bis 9, bei dem die mindestens eine Hülse (22; 220; 229) eine Nase und das Durchführrohr (23; 230) eine Aufnahme aufweist, wobei die Nase der Hülse (22; 220; 229) in der Aufnahme des Durchführrohrs (23; 230) angeordnet ist.

11. Abdichtungselement (6; 60) zum Abdichten einer Durchführung einer Durchführvorrichtung (1; 10; 19) gemäß einem der vorangehenden Ansprüche, das ein mindestens teilweise mit einem elastischen Material (62) gefülltes, verhältnismäßig festes Außenrohr (61) aufweist, wobei das Abdichtungselement (6; 60) in Längsrichtung aufklappbar ist.

12. Abdichtungselement (6; 60) nach Anspruch 11, bei dem das Außenrohr (61) zwei über ein Gelenk (613) verbundene Rohrhälften (611, 612) aufweist, die jeweils mindestens teilweise mit dem elastischen Material (62) gefüllt sind.

13. Verfahren zum Durchführen eines Kabels (8), einer Leitung und/oder eines Rohrs (7) durch eine Raumbegrenzung (5), das folgende Schritte umfasst:
Anordnen einer Durchführvorrichtung (1; 10; 19) nach einem der Ansprüche 1 bis 10 in einer Öffnung der Raumbegrenzung (5) und
dichtes Verbinden der Durchführvorrichtung (1; 10; 19) und der Raumbegrenzung (5) mittels eines thermoexpandierenden Materials (4).

14. Verfahren nach Anspruch 13, das weiter folgende Schritte umfasst:
Verbinden eines ersten Kabelschutzrohrs (7) mit der einen Seite einer der Durchführungen (2; 20; 29) der Durchführvorrichtung (1; 10; 19) und optional Verbinden eines zweiten Kabelschutzrohrs (7) mit der anderen Seite dieser Durchführung (2; 20; 29).

15. Verfahren nach Anspruch 13, das weiter folgende Schritte umfasst:
Aufklappen eines Abdichtungselements (6; 60) nach Anspruch 11 oder 12,
das Abdichtungselement (6; 60) durchragendes Anordnen mindestens eines Kabels (8),
Zuklappen des Abdichtungselements (6; 60), womit das Kabel (8) im Abdichtungselement (6; 60) eingeklemmt wird, und
Einführen des Abdichtungselements (6; 60) in eine der Durchführungen (2; 20; 29) der Durchführvorrichtung (1; 10; 19).
